# EUROPÄISCHE PATENTSCHRIFT

(11) **EP 2 942 458 B1**
(45) Veröffentlichungstag und Bekanntmachung des Hinweises auf die Patenterteilung: **12.09.2018**
(21) Anmeldenummer: 15166194.9
(22) Anmeldetag: 04.05.2015
(51) Int. Cl.: E05B 67/00, E05B 67/36, E05B 67/38, F16G 11/04, F16G 11/10, F16P 3/08

(54) **KABELVERRIEGELUNGSSYSTEM**
CABLE LOCKING SYSTEM
SYSTÈME DE VERROUILLAGE DE CÂBLE

(30) Priorität: 05.05.2014 DE 102014106227
(43) Veröffentlichungstag der Anmeldung: 11.11.2015
(73) Patentinhaber: ABUS August Bremicker Söhne KG, 58300 Wetter-Volmarstein (DE)
(72) Erfinder:
(74) Vertreter: Manitz Finsterwald Patentanwälte PartmbB

(56) Entgegenhaltungen:
- DE-U1-202006 006 223
- US-A1- 2011 041 569
- US-A1- 2014 000 324
- US-B1- 6 609 399
- US-B2- 6 755 054

## Beschreibung

Die vorliegende Erfindung betrifft ein Kabelverriegelungssystem, insbesondere zur Verriegelung von Maschinen, Geräten oder Anlagen bei Wartung, Reinigung oder Instandhaltung, umfassend ein Gehäuse, ein Kabel, dessen eines Ende am Gehäuse befestigt oder befestigbar ist und dessen anderes Ende in einen in dem Gehäuse ausgebildeten Kabelkanal einführbar ist, eine Klemmeinrichtung zum Verklemmen des Kabels in dem Kabelkanal, um ein Verschieben des Kabels in dem Kabelkanal zumindest in einer Kabelentnahmerichtung zu unterbinden, und ein der Klemmeinrichtung zugeordnetes Betätigungselement, das zwischen einer Schließstellung, in der das Betätigungselement mittels Verriegelungselementen, insbesondere Hangschlössern, an dem Gehäuse festsetzbar ist, und einer Öffnungsstellung verstellbar ist, um wenigstens eine Klemmbacke der Klemmeinrichtung wahlweise zwischen einer das Kabel in dem Kabelkanal klemmenden Haltestellung und einer das Kabel freigebenden Freigabestellung zu verstellen, wobei die Verstellung der wenigstens einen Klemmbacke zwischen der Haltestellung und der Freigabestellung eine Schwenkbewegung um eine jeweilige Schwenkachse umfasst.

Bei der Wartung, Reinigung oder Instandhaltung von Industrieanlagen und dergleichen ist es wichtig, ein unerwartetes Einschalten oder Anlaufen von Geräten und Maschinen zu verhindern, um ein sicheres Arbeiten zu gewährleisten und Unfälle zu vermeiden. Dies kann durch verschiedene Maßnahmen der Wartungssicherung erfolgen, wie z. B. ein Kennzeichnen von Schaltern oder Ventilen durch Warnschilder, was auch als "tagout" bezeichnet wird, oder ein Absperren von Schaltern oder Ventilen durch Schlösser, was auch als "lockout" bezeichnet wird. Kabelverriegelungssysteme können im Rahmen einer "lockout"-Maßnahme insbesondere zum Absperren von Ventilen, Trennschaltern, Schutzschaltern und dergleichen verwendet werden, indem z. B. das Kabel durch das Handrad eines Ventils und zusätzlich um ein feststehendes Bauteil herumgeführt, festgezogen und mittels des Gehäuses zu einer Schlaufe geschlossen wird. Jede an der Wartung beteiligte Person bringt vor dem Betreten der Gefahrenzone ein Hangschloss am Gehäuse des Kabelverriegelungssystems an und entnimmt dieses nach Abschluss der Arbeiten. Auf diese Weise ist sichergestellt, dass das Kabel erst freigegeben und demgemäß die Absperrung erst aufgehoben werden kann, wenn alle Personen die Gefahrenzone verlassen haben. Eine einfache Bedienbarkeit des Kabelverriegelungssystems ist dabei von hoher Bedeutung.

Ein Kabelverriegelungssystem ist beispielsweise in der US 6,755,054 B2 offenbart. Zum Verklemmen des Kabels werden bei diesem System zwei gleitend geführte Klemmbacken, zwischen welchen sich das Kabel befindet, aufeinander zu geschoben. Es hat sich gezeigt, dass es bei derartigen Kabelverriegelungssystemen häufig zu Beschädigungen der Kabeloberfläche kommt, insbesondere dann, wenn die Klemmbacken Zahnungen aufweisen. Besonders kritisch sind Beschädigungen der Isolierhülle eines Kabels hinsichtlich der elektrischen Sicherheit. Ein Weglassen der Zahnungen zum Schutz der Kabeloberfläche hat hingegen meist die Folge, dass das Kabel mit entsprechendem Kraftaufwand trotz der Verklemmung aus dem Kabelkanal herausgezogen werden kann, was aus Sicherheitsgründen unerwünscht ist. Ein weiteres Problem bei derartigen Kabelverriegelungssystemen besteht darin, dass die Klemmbacken oft schlecht zugänglich und daher schlecht zu reinigen sind, so dass sich Schmutz und Feuchtigkeit an ihnen festsetzen. Zudem sind solche Kabelverriegelungssysteme oft schwergängig und deren Bedienung erschließt sich dem Benutzer nicht intuitiv.

Aus der US 2014/0000324 A1 ist ein Kabelverriegelungssystem mit den Merkmalen des Oberbegriffs des Anspruchs 1 bekannt.

Es ist eine Aufgabe der Erfindung, bei Kabelverriegelungssystemen der eingangs genannten Art mit einfachen Mitteln ein zuverlässiges Verklemmen des Kabels bei gleichzeitiger Schonung der Kabeloberfläche und eine leichtere, intuitive Bedienung seitens des Benutzers zu ermöglichen.

Die Lösung der Aufgabe erfolgt durch ein Kabelverriegelungssystem mit den Merkmalen des Anspruchs 1.

Gemäß der Erfindung umfasst die Klemmeinrichtung wenigstens zwei Klemmbacken, welche beidseits des Kabelkanals angeordnet und jeweils zwischen einer das Kabel in dem Kabelkanal klemmenden Haltestellung und einer das Kabel freigebenden Freigabestellung verschwenkbar sind. Insbesondere können die beiden Klemmbacken ein Gesperre nach Art einer Schotklemme oder Curry-Klemme bilden und sich bei einem Zug am zwischen ihnen befindlichen Kabel in der Kabelentnahmerichtung verkeilen. Bei einem Zug am Kabel in der entgegengesetzten Richtung gleiten sie jedoch über die Kabeloberfläche und geben das Kabel zum Nachspannen frei.

Die Verstellung der wenigstens einen Klemmbacke zwischen der Haltestellung und der Freigabestellung umfasst eine Schwenkbewegung um eine jeweilige Schwenkachse. Die Klemmbacke wird also auf das Kabel zu verschwenkt, um dieses gegen eine analog verschwenkbare Klemmbacke zu drücken und so einzuklemmen. Da sich die Klemmbacke in einer schwenkenden Bewegung an das Kabel anlegt, ist die Quetschung des Kabels insgesamt sanfter und die Kabeloberfläche wird geschont. Außerdem ist die verschwenkbare Klemmbacke neben dem Kabelkanal angeordnet, so dass dieser gut zugänglich ist - beispielsweise zum Entfernen von Schmutzpartikeln, Schmierfetten oder -ölen.

Die Bewegung der Klemmbacke zwischen der Haltestellung und der Freigabestellung kann im Prinzip aus mehreren Komponenten zusammengesetzt sein, d.h. zusätzlich zu der Schwenkbewegung eine dieser überlagerte lineare Verschiebebewegung umfassen. Bevorzugt ist die Klemmbacke jedoch um eine feststehende Schwenkachse verschwenkbar an dem Gehäuse gelagert, d.h. die Bewegung der Klemmbacke zwischen der Haltestellung und der Freigabestellung besteht ausschließlich in einer Schwenkbewegung. Die wenigstens eine Klemmbacke kann zu diesem Zweck auf einem im Gehäuse vorgesehenen Lagerzapfen gelagert sein. Dies ermöglicht eine besonders einfache Herstellung.

In der Haltestellung greift ein Abschnitt der Klemmbacke derart in den Kabelkanal ein, dass eine ausreichende Klemmkraft auf das in dem Kabelkanal befindliche Kabel ausgeübt wird. Es kann somit sein, dass der klemmende Abschnitt der Klemmbacke lediglich geringfügig in den Kabelkanal hineinreicht. Ebenso ist es nicht zwingend notwendig, dass die Klemmbacke zum Freigeben des Kabels vollständig aus dem Kabelkanal herausgeschwenkt wird. Gemäß einer bevorzugten Ausgestaltung der Erfindung ist die wenigstens eine Klemmbacke durch Bewegen des Betätigungselements in die Öffnungsstellung jedoch vollständig aus dem Kabelkanal herausschwenkbar. Dies ist insofern vorteilhaft, als das Kabel bei in der Freigabestellung befindlicher Klemmbacke in beiden Richtungen einen vollständig freien Lauf hat und beim Herausziehen aus dem Gehäuse dementsprechend geschont wird.

Die wenigstens eine Klemmbacke kann einen exzentrischen Nocken mit einer Kabelklemmfläche aufweisen, die in einer quer zu der Schwenkachse verlaufenden Schnittebene einen konvex gekrümmten Verlauf aufweist. Aufgrund des konvex gekrümmten Verlaufs legt sich die Kabelklemmfläche gewissermaßen rollend an das Kabel an, so dass keine Beschädigungen durch Kanten zu befürchten sind.

Bevorzugt weist die Kabelklemmfläche Riffelungen und/oder Zähne auf, um die Haltekraft zu erhöhen. Solche Riffelungen oder Zähne können eine Breitenerstreckung aufweisen, die sich zumindest im Wesentlichen parallel zu der Schwenkachse erstreckt. Die Kabelklemmfläche kann auch eine nutartige Vertiefung aufweisen, die sich entlang des Kabelverlaufs erstreckt, um das Kabel zumindest teilweise zu umgreifen und dadurch zu führen, wobei bevorzugt die Riffelungen oder Zähne auch im Bereich der Vertiefung vorhanden sind.

Eine spezielle Ausgestaltung der Erfindung sieht vor, dass die Riffelungen und/oder die Zähne derart orientiert sind, dass sie in der Haltestellung gegen die Kabelentnahmerichtung angestellt sind. Ein Zug am Kabel in der Kabelentnahmerichtung führt somit dazu, dass der Eingriff der Riffelungen bzw. Zähne in die Kabeloberfläche sogar noch verstärkt wird. Hingegen können die Riffelungen bzw. Zähne bei einem Zug am Kabel entgegen der Kabelentnahmerichtung leicht aus der Kabeloberfläche herausdrehen, so dass ein leichtes Nachspannen möglich ist.

Bevorzugt ist die Klemmeinrichtung derart ausgebildet, dass in der Haltestellung ein Verschieben des Kabel in der Kabelentnahmerichtung blockiert und entgegen der Kabelentnahmerichtung möglich ist. Die Klemmbacke blockiert somit ein Verschieben des Kabels in der Kabelentnahmerichtung, lässt aber ein Verschieben des Kabels entgegen der Kabelentnahmerichtung zu. Das Kabel ist somit nachjustierbar. Wenn ein Benutzer nach dem Festsetzen des Betätigungselements am Gehäuse feststellt, dass das Kabel nicht straff genug sitzt, kann es jederzeit nachgezogen werden, ohne dass in umständlicher Weise die Hangschlösser entfernt werden müssen. Bei einem Zug am Kabel in der Kabelentnahmerichtung kann sich die Klemmbacke hingegen noch stärker am Kabel verkeilen, und das Kabel ist sicher verklemmt. Aufgrund des Verkeilens kann auch bei einer relativ geringen Klemmfläche eine hohe Klemmwirkung erzielt werden.

Vorzugsweise ist die wenigstens eine Klemmbacke durch eine Federeinrichtung, insbesondere durch eine Rundfeder oder Schenkelfeder, in Richtung der Haltestellung vorgespannt. Bevorzugt ist die Klemmeinrichtung derart ausgebildet, dass die wenigstens eine Klemmbacke durch Verschieben des Kabels entgegen der Kabelentnahmerichtung automatisch entgegen der Vorspannung aus der Haltestellung in Richtung der Freigabestellung verschwenkt wird. Auf diese Weise ist sichergestellt, dass das Kabel stets hinsichtlich einer Verschiebebewegung in der Kabelentnahmerichtung blockiert ist, sofern die Klemmbacke nicht gezielt in die Freigabestellung überführt ist.

Eine weitere Ausführungsform der Erfindung sieht vor, dass die Verstellung des Betätigungselements zwischen der Schließstellung und der Öffnungsstellung eine Schwenkbewegung um eine Verstellachse umfasst. Die Umsetzung der Bewegung des Betätigungselements in eine korrespondierende Bewegung der Klemmbacke ist somit besonders einfach.

Das Betätigungselement kann insbesondere als ein um die Verstellachse verschwenkbarer Betätigungshebel ausgeführt sein. Ein solcher Betätigungshebel ist leicht und intuitiv bedienbar.

Eine besonders einfache und direkte Kraftübertragung zwischen dem Betätigungselement und der Klemmbacke ist dann möglich, wenn die Verstellachse parallel zu der wenigstens einen Schwenkachse der wenigstens einen Klemmbacke verläuft. Die Klemmbacke kann aber auch direkt mit dem Betätigungselement antriebswirksam verbunden und dadurch verschwenkbar sein. Bei einer derartigen Ausgestaltung fällt die Schwenkachse der wenigstens einen Klemmbacke mit der Verstellachse des Betätigungselements zusammen.

Eine weitere Ausführungsform der Erfindung sieht vor, dass das Betätigungselement zumindest teilweise in einer in dem Gehäuse ausgebildeten Aussparung angeordnet ist, wobei die Schwenkbewegung des Betätigungselements um die Verstellachse in wenigstens einer Richtung durch einen jeweiligen Wandabschnitt der Aussparung begrenzt ist. Bevorzugt ist die Schwenkbewegung des Betätigungselements um die Verstellachse in beiden Richtungen durch jeweilige Wandabschnitte der Aussparung begrenzt. Die durch die Begrenzungen definierten Endstellungen des Betätigungselements können gerade der Öffnungsstellung einerseits sowie der Schließstellung andererseits entsprechen, wodurch die Bedienbarkeit der Klemmeinrichtung erleichtert ist. Vorzugsweise ist die Schwenkbewegung des Betätigungselements auf einen Winkelbereich von höchstens 120° und bevorzugt auf zumindest im Wesentlichen 90° begrenzt.

Eine weitere Ausgestaltung der Erfindung sieht vor, dass ein mit dem Betätigungselement antriebswirksam verbundenes, um die Verstellachse drehbar am Gehäuse gelagertes Stellelement mit wenigstens einem Nocken, insbesondere eine Nockenscheibe, vorgesehen ist, wobei das Stellelement über den jeweiligen Nocken mit der jeweiligen Klemmbacke derart zusammenwirkt, dass bei einem Verschwenken des Betätigungselements in die Öffnungsstellung die jeweilige Klemmbacke, insbesondere entgegen einer Vorspannung, in die Freigabestellung verschwenkt wird. Durch ein solches Stellelement kann eine Schwenkbewegung des Betätigungselements in besonders einfacher Weise in eine Schwenkbewegung der Klemmbacke umgesetzt werden. Bevorzugt sind das Stellelement und die wenigstens eine Klemmbacke bezüglich der Verstellachse in unterschiedlichen Ebenen bzw. axialen Positionen angeordnet.

Es ist bevorzugt, dass der jeweilige Nocken des Stellelements nicht an der jeweiligen Klemmbacke anliegt, wenn sich das Betätigungselement in der Schließstellung befindet. Die Klemmbacke kann dann frei von dem Einfluss des Stellelements, und insbesondere lediglich unter Einfluss einer Vorspannung, am Kabel anliegen.

Das Stellelement kann auch zwei bezüglich der Stellachse gegenüberliegende Nocken aufweisen. Die radiale Erstreckung der beiden Nocken in der Schließstellung kann jeweils zumindest im Wesentlichen parallel zu dem Kabelkanal verlaufen. Dadurch ist die gleichzeitige Betätigung zweier Klemmbacken möglich, insbesondere bei einer Ausgestaltung der Klemmeinrichtung nach Art einer Schotklemme wie vorstehend beschrieben.

Ferner kann an einer Stirnfläche der wenigstens einen Klemmbacke ein Vorsprung angeordnet sein, mit welchem der Nocken des Stellelements zusammenwirkt. Somit kann das Stellelement bezüglich der Verstellachse in einer anderen Ebene bzw. axialen Position als die Klemmbacke angeordnet werden, also zum Beispiel oberhalb oder unterhalb des Kabelkanals.

Gemäß einer speziellen Ausgestaltung weist das Betätigungselement eine Welle auf, deren Längsachse der Verstellachse entspricht, wobei das drehbare Stellelement, insbesondere über eine Nut-Feder-Verbindung, drehfest mit der Welle verbunden ist und/oder über ein Sicherungselement, insbesondere einen Sprengring, axialfest an der Welle gehalten ist. Das Betätigungselement und das Stellelement sind somit direkt aneinander gekoppelt und gemeinsam verschwenkbar. Dies ermöglicht eine besonders einfache Konstruktion.

Vorzugsweise ist das Betätigungselement in der Öffnungsstellung und/oder in der Schließstellung mit dem Gehäuse verrastbar. Dadurch ist eine besonders einfache Bedienung des Kabelverriegelungssystems möglich. Das Betätigungselement kann dadurch in der Öffnungsstellung und/oder der Schließstellung gehalten werden. Die Verrastbarkeit kann auf einfache Weise durch an dem Gehäuse vorgesehene Rastnoppen bereitgestellt sein, welche in entsprechende Rastmulden des Betätigungselements einschnappen.

Bevorzugt weist das Betätigungselement mehrere Verriegelungslöcher auf, welche mit entsprechenden, in einem Verriegelungsabschnitt des Gehäuses ausgebildeten Verriegelungslöchern fluchten, wenn sich das Betätigungselement in der Schließstellung befindet, so dass das Betätigungselement mittels Verriegelungselementen, insbesondere Hangschlössern, an dem Gehäuse festsetzbar ist. Je mehr Verriegelungslöcher vorgesehen sind, umso mehr Personen können durch Anbringen ihres eigenen Hangschlosses das Kabelverriegelungssystem blockieren. Vorzugsweise sind wenigstens fünf und besonders bevorzugt wenigstens sechs Verriegelungslöcher vorgesehen. Dies hat sich für viele Anwendungen als günstig herausgestellt.

Nach einer weiteren Ausgestaltung der Erfindung ist das Kabel mit dem einen Ende lösbar am Gehäuse befestigbar. Somit kann das Kabel bei Bedarf ausgewechselt werden, beispielsweise im Falle einer Beschädigung oder wenn ein Kabel mit einer anderen Kabellänge gewünscht ist. Es versteht sich, dass dieser Aspekt von der konkreten Ausgestaltung und Anordnung der Klemmeinrichtung unabhängig ist. Dementsprechend wird der Aspekt des lösbar befestigbaren Kabelendes auch unabhängig von den Merkmalen des kennzeichnenden Teils des Anspruchs 1 beansprucht.

Um eine solche lösbare Befestigungsmöglichkeit zu bewerkstelligen, kann an dem zur lösbaren Befestigung am Gehäuse vorgesehenen Ende des Kabels ein Kopfteil lösbar oder dauerhaft befestigt sein, wobei das Kabel, nicht aber das Kopfteil in einer Montagerichtung durch eine in einer Halteeinrichtung des Gehäuses ausgebildete Aufnahme für das mit dem Kopfteil versehene Ende des Kabels hindurchführbar ist. Das Kabel kann demnach durch die Halteeinrichtung hindurchgefädelt werden, wobei es über das Kopfteil formschlüssig und sicher an dem Gehäuse gehalten wird. Das Kopfteil kann beispielsweise mittels einer Schraub- oder Klemmverbindung am Kabel befestigt sein.

Die Halteeinrichtung kann ein Halteelement umfassen, in dem die Aufnahme ausgebildet ist und das zwischen einer Betriebsstellung und einer Montagestellung verschwenkbar in dem Gehäuse gelagert ist. In der Betriebsstellung ist das Kabel unverlierbar am Gehäuse befestigt. Eine Montage oder eine Kabelwechsel ist demgemäß nur möglich, wenn das Halteelement in die Montagestellung verschwenkt ist. Die Handhabung des Kabelverriegelungssystems kann hierdurch vereinfacht werden. Insbesondere ist das Kopfteil in der Montagestellung entgegen der Montagerichtung aus der Aufnahme entnehmbar. Bei Bedarf kann das Kabel somit trotz des Kopfteils aus der Aufnahme herausgezogen und so von dem Gehäuse entfernt werden, sofern das andere Ende des Kabels entsprechend freigegeben ist.

Gemäß einer Ausgestaltung ist in dem Gehäuse eine Schwenkaussparung für das zur lösbaren Befestigung am Gehäuse vorgesehene Ende des Kabels ausgebildet, welche ausreichend groß ist, um eine Schwenkbewegung des am Gehäuse befestigten Endes des Kabels zuzulassen. Die Schwenkaussparung kann dementsprechend als länglicher Schlitz ausgeführt sein.

Es ist bevorzugt, wenn Randabschnitte der Schwenkaussparung Anschläge für das Kabel bilden und so die Schwenkbewegung des Halteelements begrenzen, wenn das Ende des Kabels am Gehäuse befestigt ist. Dies erleichtert einem Benutzer das Verstellen des Halteelements zwischen der Betriebsstellung und der Montagestellung. Vorzugsweise ist die Schwenkbewegung des Halteelements auf einen Winkelbereich von höchstens 120° und besonders bevorzugt auf zumindest im Wesentlichen 90° begrenzt.

In dem Gehäuse kann eine Entnahmeöffnung ausgebildet sein, durch welche das Kopfteil zusammen mit dem Kabel entgegen der Montagerichtung aus dem Gehäuse entnehmbar ist. Vorzugsweise ist das Ende des Kabels lediglich dann durch die Entnahmeöffnung aus dem Gehäuse entnehmbar, wenn sich das Halteelement in der Montagestellung befindet.

Eine spezielle Ausführungsform der Erfindung sieht vor, dass mehrere Kabel mit unterschiedlichen Längen vorgesehen sind, die wahlweise mit dem jeweiligen einen Ende lösbar an dem Gehäuse befestigbar sind. Ein Benutzer kann somit aus einem Satz von unterschiedlich langen Kabeln ein für die jeweilige Anwendung passendes Kabel auswählen und dieses am Gehäuse befestigen. Ein solches Kabelverriegelungssystem ist besonders flexibel einsetzbar. Alternativ kann das Kopfteil - falls dieses lösbar am Kabel befestigt ist - von dem einem Ende des Kabels entfernt werden, um das Kabel anschließend zu kürzen und das Kopfteil schließlich wieder am Kabel zu befestigen.

Ein weiterer, unabhängig von der Ausgestaltung der Klemmeinrichtung beanspruchter Aspekt der Erfindung sieht vor, dass das Gehäuse einen Kopfabschnitt und einen mit dem Kopfabschnitt über einen Zwischenabschnitt verbundenen, als plattenförmiger Fortsatz ausgebildeten ersten Verriegelungsabschnitt aufweist, wobei die Klemmeinrichtung in dem Kopfabschnitt angeordnet ist und in dem ersten Verriegelungsabschnitt Verriegelungslöcher ausgebildet sind, und wobei das Betätigungselement als ein um eine Verstellachse verschwenkbarer Betätigungshebel ausgebildet ist, der an einem freien Ende einen plattenförmigen zweiten Verriegelungsabschnitt mit mehreren darin ausgebildeten Verriegelungslöchern aufweist, die mit den Verriegelungslöchern des ersten Verriegelungsabschnitts fluchten, wenn sich der Betätigungshebel in der Schließstellung befindet, so dass der Betätigungshebel mittels den Verriegelungselementen an dem Gehäuse festsetzbar ist.

Ein Benutzer fühlt sich aufgrund dieser Gestaltung, insbesondere der Lage und Form der beiden Verriegelungsabschnitte, an das ihm bekannte Design einer klassischen "Safety Hasp" erinnert, wie sie beispielsweise aus der US 3,667,259 bekannt ist. Dem Benutzer, der erstmalig mit dem erfindungsgemäßen Kabelverriegelungssystem konfrontiert wird, erschließt sich somit intuitiv die Bedienung der Klemmeinrichtung, da er sich von der klassischen "Safety Hasp" bereits darüber bewusst ist, wie er diese zu bedienen hat. Mit anderen Worten erkennt ein Benutzer die Funktion des Kabelverriegelungssystems auf den ersten Blick, selbst wenn ihm das vorliegende Kabelverriegelungssystem nicht physisch vorliegt, sondern dieses ihm lediglich in Form einer Abbildung entgegentritt. Dieser Wiedererkennungseffekt ermöglicht eine besonders einfache und intuitive Bedienung, welche wiederum mit einer erhöhten Sicherheit einhergeht.

Es kann vorgesehen sein, dass der Kopfabschnitt in einer zumindest im Wesentlichen senkrecht zur Verstellachse verlaufenden Ebene über einen Winkelbereich von mehr als 180°, insbesondere mehr als 200°, bevorzugt mehr als 220°, besonders bevorzugt zumindest im Wesentlichen 240°, kreisförmig abgerundet ist. Die intuitive Bedienung der Klemmeinrichtung kann aufgrund der Anlehnung an das bekannte Design einer klassischen "Safety Hasp" daher noch verstärkt werden.

Die beiden Verriegelungsabschnitte können zumindest im Wesentlichen identisch ausgebildet sein und/oder jeweils eine rechteckige Gestalt, vorzugsweise mit abgerundeten Ecken, aufweisen. Dies kommt der Analogie zu einer "Safety Hasp" weiter entgegen.

Eine weitere Ausführungsform der Erfindung sieht vor, dass der Zwischenabschnitt in einer senkrecht zur Verstellachse verlaufenden Ebene und in einer senkrecht zur Längsrichtung des in der Schließstellung befindlichen Betätigungshebels verlaufenden Richtung im Vergleich zu dem Kopfabschnitt und dem ersten Verriegelungsabschnitt eine reduzierte Breite aufweist, wobei bevorzugt die Breite des Betätigungshebels in einem dem Zwischenabschnitt des Gehäuses entsprechenden Bereich die reduzierte Breite nicht überschreitet. Eine derartige "Taillierung" ist bei vielen klassischen "Safety Hasps" vorhanden, so dass der Wiedererkennungseffekt noch gesteigert werden kann.

Weiterbildungen der Erfindung sind auch in den abhängigen Ansprüchen, der Beschreibung sowie den beigefügten Zeichnungen angegeben.

Die Erfindung wird nachfolgend beispielhaft unter Bezugnahme auf die Zeichnungen beschrieben.
- Fig. 1: ist eine perspektivische Darstellung eines erfindungsgemäßen Kabelverriegelungssystems, wobei sich ein Betätigungselement des Kabelverriegelungssystems in einer Schließstellung befindet.
- Fig. 2: zeigt das Kabelverriegelungssystem gemäß Fig. 1, wobei sich das Betätigungselement in einer Öffnungsstellung befindet.
- Fig. 3: ist eine vergrößerte Teildarstellung des in Fig. 1 gezeigten Kabelverriegelungssystems in einer aufgeschnittenen Draufsicht.
- Fig. 4: entspricht der Darstellung gemäß Fig. 3, wobei eine Nockenscheibe weggelassen ist.
- Fig. 5: zeigt die in Fig. 4 dargestellte Anordnung in einer perspektivischen Ansicht.
- Fig. 6: ist eine vergrößerte Teildarstellung des in Fig. 2 gezeigten Kabelverriegelungssystems in einer aufgeschnittenen Draufsicht.
- Fig. 7: entspricht der Darstellung gemäß Fig. 6, wobei die Nockenscheibe weggelassen ist.
- Fig. 8: zeigt die in Fig. 7 dargestellte Anordnung in einer perspektivischen Ansicht.
- Fig. 9: zeigt eine Aufnahmehülse eines erfindungsgemäßen Kabelverriegelungssystems in einer perspektivischen Einzeldarstellung.

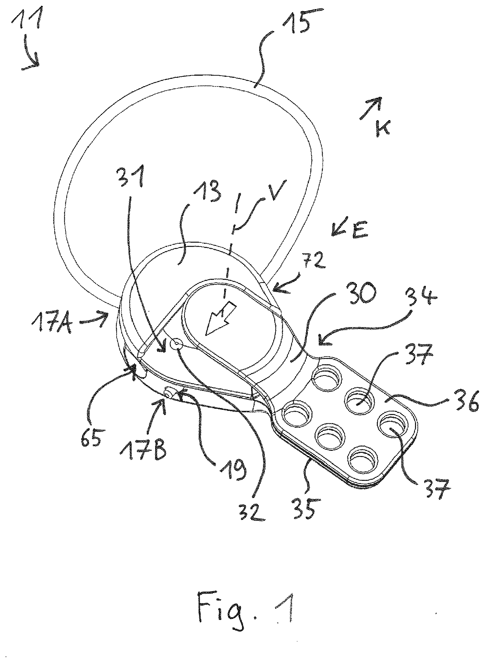

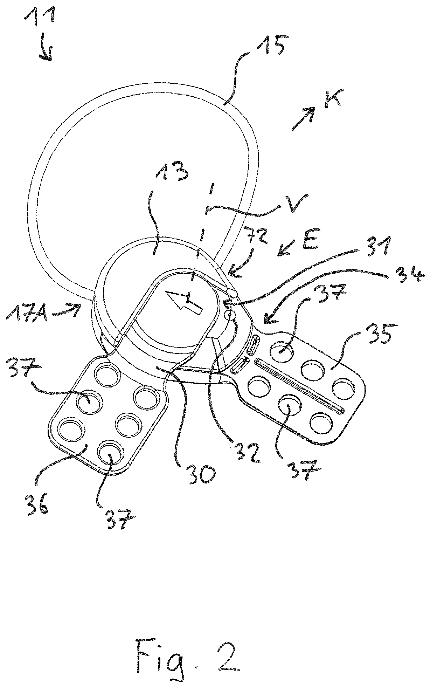

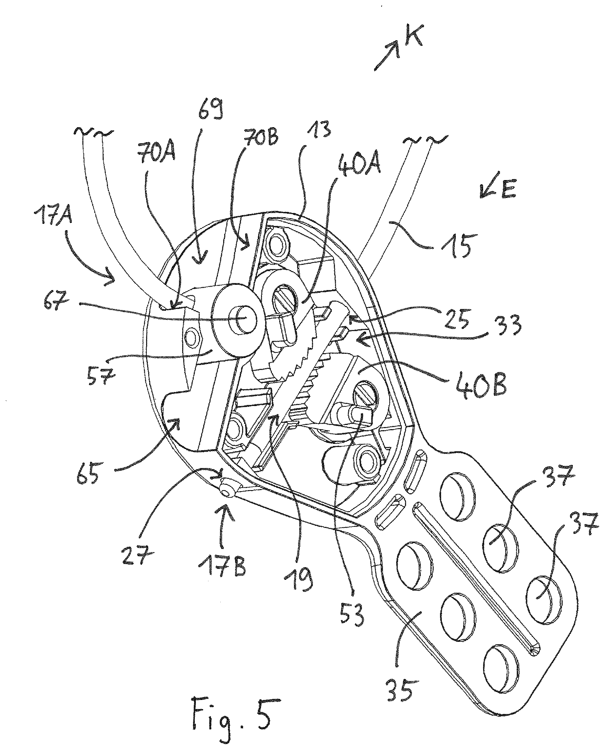

Das in Fig. 1 und 2 gezeigte Kabelverriegelungssystem 11 umfasst ein Gehäuse 13 sowie ein Kabel 15. Das im Bild links oben gelegene Ende 17A des Kabels 15 ist am Gehäuse 13 befestigt, während das andere Ende 17B des Kabels 15 durch einen Kabelkanal 19 hindurchgeführt ist, welcher in dem Gehäuse 13 ausgebildet ist. Dieses Ende 17B des Kabels 15 kann durch eine in Fig. 5 sichtbare Einführöffnung 25 in einer Einführrichtung E in den Kabelkanal 19 eingeführt werden und durch eine gegenüberliegende Ausführöffnung 27 wieder aus dem Gehäuse 13 austreten. Ein um eine Verstellachse V verschwenkbarer Betätigungshebel 30 dient dazu, bei Bedarf das Kabel 15 derart in dem Kabelkanal 19 zu fixieren, dass dieses in der Einführrichtung E, nicht jedoch in der entgegengesetzten Kabelentnahmerichtung K, verschoben werden kann. Hierfür ist eine Klemmeinrichtung 33 in dem Gehäuse 13 angeordnet, welche nachfolgend noch genauer beschrieben wird.

Das Gehäuse 13 weist einen Kopfabschnitt 72 und einen mit dem Kopfabschnitt 72 über einen Zwischenabschnitt 34 verbundenen, als plattenförmiger Fortsatz ausgebildeten ersten Verriegelungsabschnitt 35 auf. Der Kopfabschnitt 72 umschließt den Innenraum des Gehäuses 13, in welchem die Klemmeinrichtung 33 angeordnet ist. Der plattenförmige erste Verriegelungsabschnitt 35 ist von mehreren - hier sechs paarweise angeordneten - Verriegelungslöchern 37 durchsetzt.

Der Betätigungshebel 30 weist an einem freien Ende einen plattenförmigen zweiten Verriegelungsabschnitt 36 auf, welcher ebenfalls von mehreren - hier sechs paarweise angeordneten - Verriegelungslöchern 37 durchsetzt ist. Wie aus Fig. 1 hervorgeht, fluchten die Verriegelungslöcher 37 des zweiten Verriegelungsabschnitts 36 mit den Verriegelungslöchern 37 des ersten Verriegelungsabschnitts 35, wenn sich der Betätigungshebel 30 in einer Schließstellung befindet (Fig. 1). Wie gezeigt sind die beiden Verriegelungsabschnitte 35, 36 im Wesentlichen identisch ausgebildet und weisen jeweils eine rechteckige Gestalt mit abgerundeten Ecken auf. Speziell weisen der erste Verriegelungsbereich 35 und der zweite Verriegelungsbereich 36 jeweils ein Seitenverhältnis auf, das in Abhängigkeit der Anzahl vorhandener Verriegelungslöcher 37 von 1:2 bis 1:1 variieren kann. In der dargestellten Ausführungsform mit zwei mal drei Verriegelungslöchern 37 kann das Seitenverhältnis beispielweise etwa 4:5 betragen, wohingegen im Falle von zwei mal vier Verriegelungslöchern 37 das Seitenverhältnis etwa 4:6 betragen kann, wobei das Seitenverhältnis zusätzlich vom Durchmesser der Verriegelungslöcher 37 beeinflusst wird.

Fig. 1 lässt sich entnehmen, dass der Kopfabschnitt 72 in einer zumindest im Wesentlichen senkrecht zur Verstellachse V verlaufenden Ebene über einen Winkelbereich von etwa 240° kreisförmig abgerundet ist. Der Zwischenabschnitt 34 weist in einer senkrecht zur Verstellachse V verlaufenden Ebene und in einer senkrecht zur Längsrichtung des in der Schließstellung befindlichen Betätigungshebels 30 verlaufenden Richtung im Vergleich zu dem Kopfabschnitt 72 und dem ersten Verriegelungsabschnitt 35 eine reduzierte Breite auf, wobei die Breite des Betätigungshebels 30 in einem dem Zwischenabschnitt 34 des Gehäuses 13 entsprechenden Bereich diese reduzierte Breite nicht überschreitet, sondern dieser entspricht.

Der bezüglich des Gehäuses 13 verschwenkbare Betätigungshebel 30 und der unverschwenkbare erste Verriegelungsabschnitt 35 bilden zwei scheren- oder zangenartige Schenkel. Wenn sich der Betätigungshebel 30 in der in Fig. 1 gezeigten Schließstellung befindet, ist das Kabel 15 in dem Kabelkanal 19 verklemmt und die Verriegelungslöcher 37 des ersten Verriegelungsabschnitts 35 fluchten mit den Verriegelungslöchern 37 des zweiten Verriegelungsabschnitts 36. Der Betätigungshebel 30 kann in dieser Stellung mittels eines oder mehrerer - bis zu sechs - Hangschlösser (nicht dargestellt) an dem Gehäuse 13 festgesetzt werden.

Der Betätigungshebel 30 wirkt derart auf die Klemmeinrichtung 33 ein, dass das Kabel 15 verklemmt ist, wenn sich der Betätigungshebel 30 in der Schließstellung gemäß Fig. 1 befindet. Sofern der Betätigungshebel 30 nicht mittels Hangschlössern am Gehäuse 13 festgesetzt ist, kann er ausgehend von der Schließstellung um 90° in die in Fig. 2 gezeigte Öffnungsstellung verschwenkt werden, in welcher das Kabel 15 in beiden Richtungen E und K frei in dem Kabelkanal 19 verschiebbar ist.

Wie dargestellt ist der achsennahe Abschnitt des Betätigungshebels 30 in einer in dem Gehäuse 13 ausgebildeten Aussparung 31 angeordnet, wobei die Schwenkbewegung des Betätigungshebels 30 um die Verstellachse V in beiden Schwenkrichtungen durch Wandabschnitte der Aussparung 31 begrenzt ist. Weiterhin sind am Boden der Aussparung 31 Rastnoppen 32 vorgesehen, welche in nicht dargestellte Rastmulden am Betätigungshebel 30 einrasten können, um diesen in der Öffnungsstellung und in der Schließstellung mit dem Gehäuse 13 zu verrasten.

Das erfindungsgemäße Kabelverriegelungssystem 11 dient zur Verriegelung von Maschinen, Geräten oder Anlagen bei Wartung, Reinigung oder Instandhaltung, wobei das freie Ende 17B des Kabels 15 zunächst um die abzusperrenden Bauteile herum und/oder durch entsprechende Öffnungen hindurchgeführt und anschließend bei in der Öffnungsstellung befindlichem Betätigungshebel 30 in den Kabelkanal 19 des Gehäuses 13 eingeführt wird, bis es straff sitzt. Danach wird der Betätigungshebel 30 in die Schließstellung geschwenkt und die Hangschlösser werden an den Verriegelungslöchern 37 angebracht. Bei Bedarf kann ein Nachspannen erfolgen. Nach Beendigung der Wartungs- Reinigungs- oder Instandhaltungsarbeiten erfolgt das Entfernen des Kabelverriegelungssystems 11 von der entsprechenden Anlage mit umgekehrter Reihenfolge der Schritte.

Durch das Gewicht des Fortsatzes 35 und der Hangschlösser wird das Gehäuse 13 während einer Absperrung in gewissem Sinne aufgerichtet, so dass er gut erkennbar ist und zusätzlich eine "tagout"-Funktion bereitstellt. Um eine hohe Signalwirkung zu erreichen, können Teile des Gehäuses 13 und insbesondere der Betätigungshebel 30 rot gefärbt sein. Im Sinne der Bedienerfreundlichkeit kann es auch vorteilhaft sein, die beiden gegeneinander zu verschwenkenden Schenkel, also den Betätigungshebel 30 einerseits und den Fortsatz 35 andererseits, unterschiedlich zu färben. Die Öffnungsrichtung und zugleich die Kabeleinführrichtung E aus der bzw. in der Schließstellung ist auf dem Betätigungshebel 30 in Form eines Pfeils angegeben.

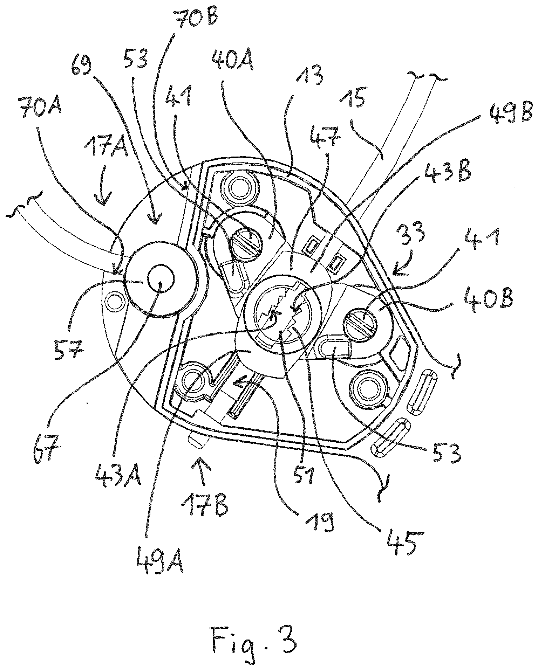

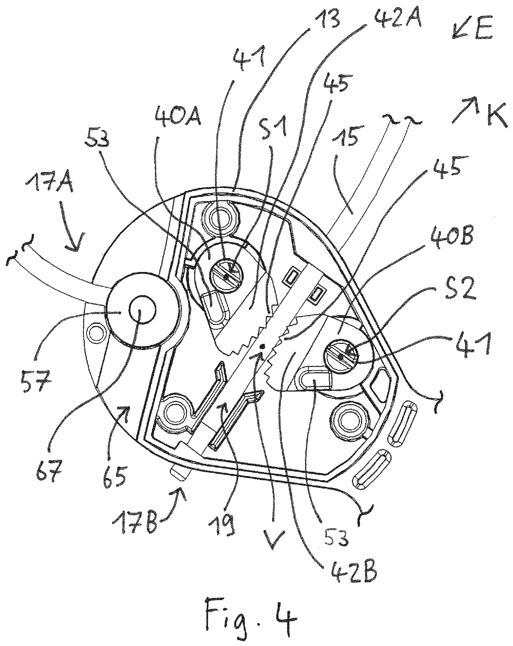

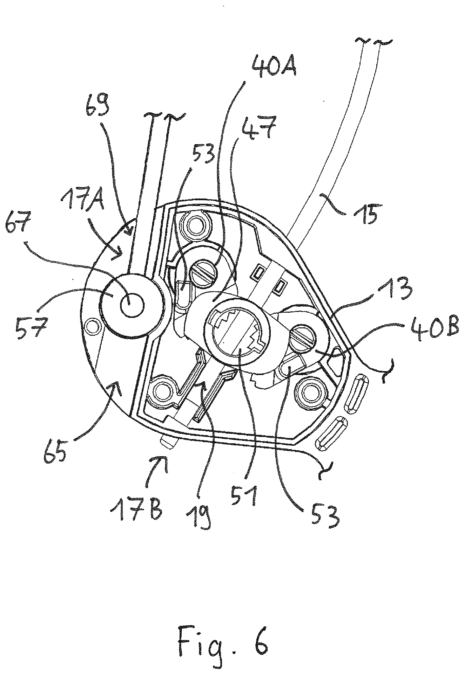

Nachfolgend wird die Klemmeinrichtung 33 unter Bezugnahme auf die Fig. 3 bis 8 genauer beschrieben. Speziell ist die Klemmeinrichtung 33 nach Art einer Curry-Klemme gestaltet und umfasst zwei Klemmbacken 40A, 40B, die zu beiden Seiten des Kabelkanals 19 angeordnet sind und jeweils zwischen einer das Kabel 15 zwischen sich einklemmenden Haltestellung - wie in Fig. 3 bis 5 gezeigt - und einer das Kabel 15 freigebenden Freigabestellung - wie in Fig. 6 bis 8 gezeigt - verschwenkbar sind. Die Klemmbacken 40A, 40B sind auf feststehenden Lagerzapfen 41 gelagert, welche am Gehäuse 13 vorgesehen sind und wie dargestellt einen geteilten Rastabschnitt aufweisen. Die Längsachsen der Lagerzapfen 41 entsprechen den jeweiligen Schwenkachsen S1, S2 (Fig. 4) der Klemmbacken 40A, 40B. Die Verstellachse V verläuft zwischen den Schwenkachsen S1, S2 und parallel zu diesen.

Die Klemmbacken 40A, 40B weisen jeweils einen exzentrischen Nocken 42A, 42B auf, welcher eine Kabelklemmfläche 43A, 43B definiert. Die Kabelklemmflächen 43A, 43B sind gezahnt und weisen jeweils in einer quer zu der entsprechenden Schwenkachse S1, S2 verlaufenden Schnittebene einen konvex gekrümmten Verlauf auf. Wie in Fig. 4 erkennbar sind die an den Kabelklemmflächen 43A, 43B vorgesehenen Zähne 45 gegen die Kabelentnahmerichtung K angestellt.

Die Klemmbacken 40A, 40B sind durch jeweilige, in den Figuren nicht sichtbare, unter den Klemmbacken 40A, 40B angeordnete Rundfedern in Richtung des Kabels 15 vorgespannt. Ferner ist eine mit dem Betätigungshebel 30 antriebswirksam verbundene und um die Verstellachse V drehbar am Gehäuse 13 gelagerte Nockenscheibe 47 (Fig. 3) vorgesehen, welche zwei bezüglich der Verstellachse V gegenüberliegende Nocken 49A, 49B aufweist. Die Nockenscheibe 47 weist eine zentrale Durchführung 51 auf, deren Umrandung für einen drehfesten Eingriff einer sich von dem Betätigungshebel 30 erstreckenden Welle (nicht dargestellt) profiliert ist. Ferner ist die Nockenscheibe 47 über einen ebenfalls nicht dargestellten Sprengring axialfest an der Welle des Betätigungshebels 30 gehalten. Stirnseitig erstrecken sich jeweilige Vorsprünge 53 von den Klemmbacken 40A, 40B, welche wie dargestellt zur Nockenscheibe 47 hin abgerundet sind.

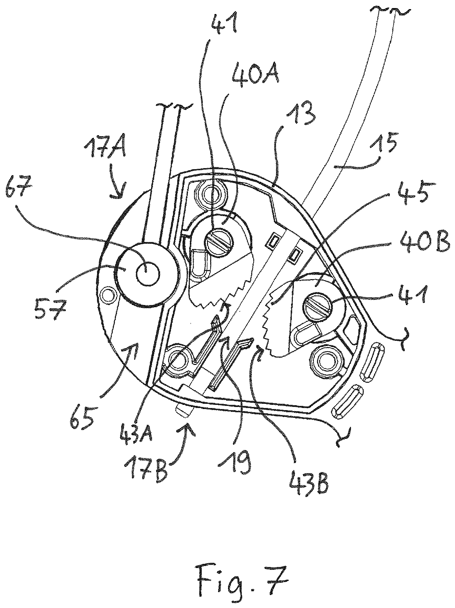

Aus Fig. 3 geht hervor, dass die Nocken 49A, 49B der Nockenscheibe 47 bei in der Schließstellung befindlichem Betätigungshebel 30 die Vorsprünge 53 der Klemmbacken 40A, 40B nicht berührt. Die Klemmbacken 40A, 40B werden somit unter freier Einwirkung der Federkraft in Richtung des Kabels 15 gedrückt, wo sie eine klemmende Haltestellung einnehmen. Bei einem Verschwenken des Betätigungshebels 30 in die Öffnungsstellung gelangen die Nocken 49A, 49B in einen gleitenden Eingriff mit den Vorsprüngen 35 und drücken so entgegen der Federkraft die Klemmbacken 40A, 40B auseinander, bis diese sich in einer Freigabestellung befinden, also aus dem Kabelkanal 19 herausgeschwenkt sind (Fig. 7). Es versteht sich, dass ein Verschieben des Kabels 15 in der Einführrichtung E auch bei anliegenden Klemmbacken 40A, 40B möglich ist. Bei einem Zug am Kabel 15 in der Kabelentnahmerichtung K hingegen verkeilen sich die Klemmbacken 40A, 40B am Kabel 15 - und zwar mit zunehmender Zugkraft immer stärker.

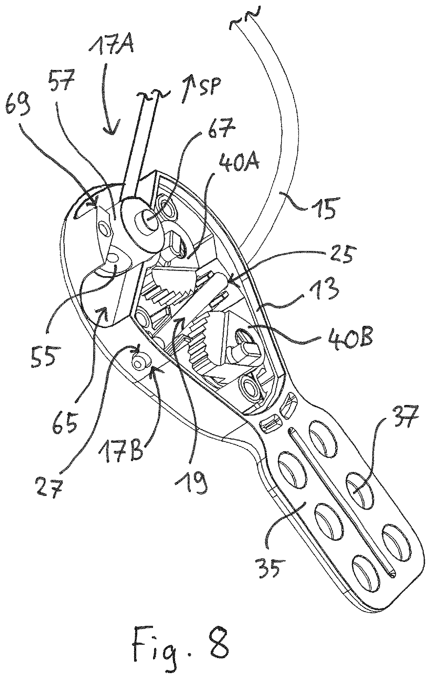

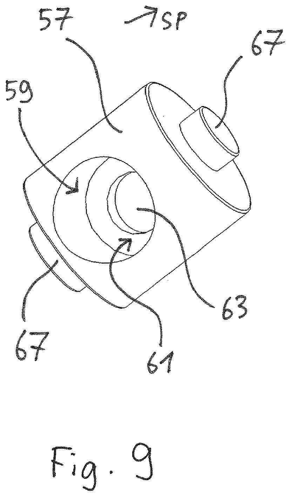

Das in den Figuren links gelegene Ende 17A des Kabels 15 ist wie erwähnt am Gehäuse 13 befestigt. Es kann jedoch bei Bedarf, z. B. bei einem gewünschten Kabelwechsel, von dem Gehäuse 13 gelöst werden. Speziell ist an dem zur lösbaren Befestigung am Gehäuse 13 vorgesehenen Ende 17B des Kabels 15 ein Kopfteil 55 (Fig. 8) befestigt, beispielsweise angeschraubt oder angeklemmt. Dieses Kopfteil 55 ist in einer Haltehülse 57 angeordnet, welche in Fig. 9 einzeln gezeigt ist. Eine in der Haltehülse 57 ausgebildete Aufnahme 59 für das Kopfteil 55 weist einen Boden 61 mit einer Durchführung 63 auf, welche gerade zum Durchführen des Kabels 15 ausreicht. Da das Kopfteil 55 nicht durch die Durchführung 63 hindurchpasst, kann das Kabel 15 in einer Montagerichtung SP nicht aus der Aufnahme 59 herausgezogen werden. Entgegen der Montagerichtung SP ist dies jedoch grundsätzlich möglich.

Um das Kopfteil 55 aus der Aufnahme 59 und dem Gehäuse 13 herausbewegen zu können, ist an diesem eine Entnahmeöffnung 65 vorgesehen, durch welche das am Gehäuse 13 befestigte Ende 17A des Kabels 15 einschließlich des Kopfteils 55 entgegen der Montagerichtung SP aus dem Gehäuse 13 herausbewegbar ist.

Die Haltehülse 57 ist hierzu mittels zapfenartiger Vorsprünge 67 verschwenkbar in dem Gehäuse gelagert, so dass sie zwischen einer in Fig. 3 bis 5 gezeigten Betriebsstellung und einer in Fig. 6 bis 8 gezeigten Montagestellung verschwenkbar ist. Nur in der Montagestellung ist ein Herausschieben des Kopfteils 55 aus der Haltehülse 57 und aus dem Gehäuse 13 möglich.

Um eine Schwenkbewegung des am Gehäuse 13 befestigten Endes 17A des Kabels 15 zuzulassen, weist das Gehäuse 13 ferner eine Schwenkaussparung 69 für das zur lösbaren Befestigung am Gehäuse vorgesehenen Ende 17A des Kabels 15 auf. Randabschnitte 70A, 70B (Fig. 5) der Schwenkaussparung 69 bilden hierbei Anschläge für das Kabel 15 und sorgen so für eine Begrenzung der Schwenkbewegung der Haltehülse 57 auf einen Winkelbereich von etwa 90°, sofern das Ende 17A des Kabels 15 am Gehäuse 13 befestigt ist.

Für einen Kabelwechsel werden zunächst die Klemmbacken 40A, 40B aus dem Kabelkanal 19 herausgeschwenkt und dann wird die Haltehülse 57 über das Ende 17A des Kabels 15 in die Montagestellung geschwenkt. Anschließend wird das Ende 17A des Kabels 15 mit dem Kopfteil 55 voran entgegen der Montagerichtung SP durch die Entnahmeöffnung 65 und aus dem Gehäuse 13 herausgeführt. Das Kabel 15 kann dann vollständig durch das Gehäuse 13 gezogen und von diesem entfernt werden. Anschließend kann ein neues mit einem Kopfteil versehenes Kabel, insbesondere mit einer anderen Länge, in der Montagerichtung SP in die Haltehülse 57 eingefädelt und nach Zurückschwenken der Haltehülse 57 in die Betriebsstellung wie zuvor beschrieben mit dem Kabelverriegelungssystem 11 verwendet werden.

Aufgrund der speziellen Gestaltung des Gehäuses 13 erschließt sich einem Benutzer der Verwendungszweck des erfindungsgemäßen Kabelverriegelungssystems 11 auf den ersten Blick. Ein besonderer Vorteil besteht darin, dass das optische Erscheinungsbild des Kabelverriegelungssystems 11 an eine klassische "Safety-Hasp" erinnert, welche im Rahmen des "tagout/lockout" allgemein bekannt ist. Wie bei einer solchen "Safety-Hasp" können bei dem erfindungsgemäßen Kabelverriegelungssystem 11 bis zu sechs Hangschlösser aufgenommen werden, während bei herkömmlichen Kabelverriegelungssystemen maximal vier Schlösser angebracht werden können.

Eine sichere und intuitive Bedienbarkeit ist für Kabelverriegelungssysteme von großer Bedeutung, da Reparaturen und Reinigungen häufig ungeplant und plötzlich auftreten. Das beschriebene erfindungsgemäße Kabelverriegelungssystem 11 ist nicht erklärungsbedürftig, da sowohl der Verwendungszweck als auch die Bedienung unmittelbar erkennbar sind. Speziell werden durch die Gestaltung des erfindungsgemäßen Kabelverriegelungssystems 11 Fehlanwendungen, Fehlbedienungen und Zeitverluste vermieden, was für sicherheitsrelevante "lockout"-Maßnahmen besonders wichtig ist.

### Bezugszeichenliste

- 11: Kabelverriegelungssystem
- 13: Gehäuse
- 15: Kabel
- 17A,17B: Ende
- 19: Kabelkanal
- 25: Einführöffnung
- 27: Ausführöffnung
- 30: Betätigungshebel
- 31: Aussparung
- 32: Rastnoppe
- 33: Klemmeinrichtung
- 34: Zwischenabschnitt
- 35: erster Verriegelungsabschnitt
- 36: zweiter Verriegelungsabschnitt
- 37: Verriegelungsloch
- 40A, 40B: Klemmbacke
- 41: Lagerzapfen
- 42A, 42B: exzentrischer Nocken
- 43A, 43B: Kabelklemmfläche
- 45: Zahn
- 47: Nockenscheibe
- 49A, 49B: Nocken
- 51: Durchführung
- 53: Vorsprung
- 55: Kopfteil
- 57: Haltehülse
- 59: Aufnahme
- 61: Boden
- 63: Durchführung
- 65: Entnahmeöffnung
- 67: Vorsprung
- 69: Schwenkaussparung
- 70A, 70B: Randabschnitt
- 72: Kopfabschnitt

- V: Verstellachse
- E: Einführrichtung
- K: Kabelentnahmerichtung
- S1, S2: Schwenkachse
- SP: Montagerichtung

## Patentansprüche

1. Kabelverriegelungssystem (11), insbesondere zur Verriegelung von Maschinen, Geräten oder Anlagen bei Wartung, Reinigung oder Instandhaltung, umfassend:
ein Gehäuse (13),
ein Kabel (15), dessen eines Ende (17A) am Gehäuse (13) befestigt oder befestigbar ist und dessen anderes Ende (17B) in einen in dem Gehäuse (13) ausgebildeten Kabelkanal (19) einführbar ist,
eine Klemmeinrichtung (33) zum Verklemmen des Kabels (15) in dem Kabelkanal (19), um ein Verschieben des Kabels (15) in dem Kabelkanal (19) zumindest in einer Kabelentnahmerichtung (K) zu unterbinden, und
ein der Klemmeinrichtung (33) zugeordnetes Betätigungselement (30), das zwischen einer Schließstellung, in der das Betätigungselement (30) mittels Verriegelungselementen, insbesondere Hangschlössern, an dem Gehäuse (13) festsetzbar ist, und einer Öffnungsstellung verstellbar ist, um wenigstens eine Klemmbacke (40A, 40B) der Klemmeinrichtung (33) wahlweise zwischen einer das Kabel (15) in dem Kabelkanal (19) klemmenden Haltestellung und einer das Kabel (15) freigebenden Freigabestellung zu verstellen, wobei
die Verstellung der wenigstens einen Klemmbacke (40A, 40B) zwischen der Haltestellung und der Freigabestellung eine Schwenkbewegung um eine jeweilige Schwenkachse (S1, S2) umfasst,
**dadurch gekennzeichnet, dass**
die Klemmeinrichtung (33) wenigstens zwei Klemmbacken (40A, 40B) umfasst, welche beidseits des Kabelkanals (19) angeordnet und jeweils zwischen einer das Kabel (15) in dem Kabelkanal (19) klemmenden Haltestellung und einer das Kabel (15) freigebenden Freigabestellung verschwenkbar sind.

2. Kabelverriegelungssystem nach Anspruch 1,
**dadurch gekennzeichnet, dass**
die wenigstens eine Klemmbacke (40A, 40B) einen exzentrischen Nocken (42A, 42B) mit einer Kabelklemmfläche (43A, 43B) aufweist, die in einer quer zu der Schwenkachse (S1, S2) verlaufenden Schnittebene einen konvex gekrümmten Verlauf aufweist, wobei insbesondere die Kabelklemmfläche (43A, 43B) Riffelungen und/oder Zähne (45) aufweist, wobei bevorzugt die Riffelungen und/oder Zähne (45) derart orientiert sind, dass sie in der Haltestellung gegen die Kabelentnahmerichtung (K) angestellt sind.

3. Kabelverriegelungssystem nach einem der vorstehenden Ansprüche,
**dadurch gekennzeichnet, dass**
die Klemmeinrichtung (33) derart ausgebildet ist, dass in der Haltestellung ein Verschieben des Kabels (15) in der Kabelentnahmerichtung (K) blockiert und entgegen der Kabelentnahmerichtung (K) möglich ist, wobei insbesondere die wenigstens eine Klemmbacke (40A, 40B) durch eine Federeinrichtung, insbesondere durch eine Schenkelfeder, in Richtung der Haltestellung vorgespannt ist, wobei bevorzugt die Klemmeinrichtung (33) derart ausgebildet ist, dass die wenigstens eine Klemmbacke (40A, 40B) durch Verschieben des Kabels (15) entgegen der Kabelentnahmerichtung (K) automatisch entgegen der Vorspannung aus der Haltestellung in Richtung der Freigabestellung verschwenkt wird.

4. Kabelverriegelungssystem nach einem der vorstehenden Ansprüche,
**dadurch gekennzeichnet, dass**
die Verstellung des Betätigungselements (30) zwischen der Schließstellung und der Öffnungsstellung eine Schwenkbewegung um eine Verstellachse (V) umfasst.

5. Kabelverriegelungssystem nach Anspruch 4,
**dadurch gekennzeichnet, dass**
das Betätigungselement (30) als ein um die Verstellachse (V) verschwenkbarer Betätigungshebel ausgeführt ist, und/oder die Verstellachse (V) parallel zu der wenigstens einen Schwenkachse (S1, S2) der wenigstens einen Klemmbacke (40A, 40B) verläuft, und/oder das Betätigungselement (30) zumindest teilweise in einer in dem Gehäuse (13) ausgebildeten Aussparung (31) angeordnet ist, wobei die Schwenkbewegung des Betätigungselements (30) um die Verstellachse (V) in wenigstens einer Richtung durch einen jeweiligen Wandabschnitt der Aussparung (31) begrenzt ist.

6. Kabelverriegelungssystem nach Anspruch 4 oder 5,
**dadurch gekennzeichnet, dass**
ein mit dem Betätigungselement (30) antriebswirksam verbundenes, um die Verstellachse (V) drehbar am Gehäuse (13) gelagertes Stellelement (47) mit wenigstens einem Nocken (49A, 49B), insbesondere eine Nockenscheibe, vorgesehen ist, wobei das Stellelement (47) über den jeweiligen Nocken (49A, 49B) mit der jeweiligen Klemmbacke (40A, 40B) derart zusammenwirkt, dass bei einem Verschwenken des Betätigungselements (30) in die Öffnungsstellung die jeweilige Klemmbacke (40A, 40B), insbesondere entgegen einer Vorspannung, in die Freigabestellung verschwenkt wird.

7. Kabelverriegelungssystem nach Anspruch 6,
**dadurch gekennzeichnet, dass**
der jeweilige Nocken (49A, 49B) des Stellelements (47) nicht an der jeweiligen Klemmbacke (40A, 40B) anliegt, wenn sich das Betätigungselement (30) in der Schließstellung befindet, und/oder das Stellelement (47) zwei bezüglich der Verstellachse (V) gegenüberliegende Nocken (49A, 49B) aufweist.

8. Kabelverriegelungssystem nach 6 oder 7,
**dadurch gekennzeichnet, dass**
an einer Stirnfläche der wenigstens einen Klemmbacke (40A, 40B) ein Vorsprung (53) angeordnet ist, mit welchem der Nocken (49A, 49B) des Stellelements (47) zusammenwirkt, und/oder das Betätigungselement (30) eine Welle aufweist, deren Längsachse der Verstellachse (V) entspricht, wobei das drehbare Stellelement (47), insbesondere über eine Nut-Feder-Verbindung, drehfest mit der Welle verbunden ist und/oder über ein Sicherungselement, insbesondere einen Sprengring, axialfest an der Welle gehalten ist.

9. Kabelverriegelungssystem nach einem der vorstehenden Ansprüche,
**dadurch gekennzeichnet, dass**
das Betätigungselement (30) in der Öffnungsstellung und/oder in der Schließstellung mit dem Gehäuse (13) verrastbar ist, und/oder das Betätigungselement (30) mehrere Verriegelungslöcher (37) aufweist, welche mit entsprechenden, in einem Verriegelungsabschnitt (35) des Gehäuses (13) ausgebildeten Verriegelungslöchern (37) fluchten, wenn sich das Betätigungselement (30) in der Schließstellung befindet, so dass das Betätigungselement (30) mittels Verriegelungselementen, insbesondere Hangschlössern, an dem Gehäuse (13) festsetzbar ist.

10. Kabelverriegelungssystem nach einem der vorstehenden Ansprüche,
**dadurch gekennzeichnet, dass**
das Kabel (15) mit dem einen Ende (17A) lösbar am Gehäuse (13) befestigbar ist.

11. Kabelverriegelungssystem nach Anspruch 10,
**dadurch gekennzeichnet, dass**
an dem zur lösbaren Befestigung am Gehäuse (13) vorgesehenen Ende (17A) des Kabels (15) ein Kopfteil (55) befestigt ist, wobei das Kabel (15), nicht aber das Kopfteil (55) in einer Montagerichtung (SP) durch eine in einer Halteeinrichtung (57) des Gehäuses (13) ausgebildete Aufnahme (59) für das mit dem Kopfteil (55) versehene Ende (17A) des Kabels (15) hindurchführbar ist.

12. Kabelverriegelungssystem nach Anspruch 11,
**dadurch gekennzeichnet, dass**
die Halteeinrichtung (57) ein Halteelement umfasst, in dem die Aufnahme (59) ausgebildet ist und das zwischen einer Betriebsstellung und einer Montagestellung verschwenkbar in dem Gehäuse (13) gelagert ist.

13. Kabelverriegelungssystem nach Anspruch 12,
**dadurch gekennzeichnet, dass**
in dem Gehäuse (13) eine Schwenkaussparung (69) für das zur lösbaren Befestigung am Gehäuse (13) vorgesehene Ende (17A) des Kabels (15) ausgebildet ist, welche ausreichend groß ist, um eine Schwenkbewegung des am Gehäuse (13) befestigten Endes (17A) des Kabels (15) zuzulassen, wobei insbesondere Randabschnitte (70A, 70B) der Schwenkaussparung (69) Anschläge für das Kabel (15) bilden und so die Schwenkbewegung des Halteelements (57) begrenzen, wenn das Ende (17A) des Kabels (15) am Gehäuse (13) befestigt ist.

14. Kabelverriegelungssystem nach Anspruch 12 oder 13,
**dadurch gekennzeichnet, dass**
in dem Gehäuse (13) eine Entnahmeöffnung (65) ausgebildet ist, durch welche in der Montagestellung des Halteelements (57) das Kopfteil (55) zusammen mit dem Kabel (15) entgegen der Montagerichtung (SP) aus dem Gehäuse (13) entnehmbar ist.

15. Kabelverriegelungssystem nach einem der Ansprüche 11 bis 14,
**dadurch gekennzeichnet, dass**
mehrere Kabel (15) mit unterschiedlichen Längen vorgesehen sind, die wahlweise mit dem jeweiligen einen Ende (17A) lösbar an dem Gehäuse (13) befestigbar sind.

16. Kabelverriegelungssystem nach einem der vorstehenden Ansprüche,
**dadurch gekennzeichnet, dass**
das Gehäuse (13) einen Kopfabschnitt (72) und einen mit dem Kopfabschnitt (72) über einen Zwischenabschnitt (34) verbundenen, als plattenförmiger Fortsatz ausgebildeten ersten Verriegelungsabschnitt (35) aufweist, wobei die Klemmeinrichtung (33) in dem Kopfabschnitt (72) angeordnet ist und in dem ersten Verriegelungsabschnitt (35) Verriegelungslöcher (37) ausgebildet sind, und wobei das Betätigungselement (30) als ein um eine Verstellachse (V) verschwenkbarer Betätigungshebel ausgebildet ist, der an einem freien Ende einen plattenförmigen zweiten Verriegelungsabschnitt (36) mit mehreren darin ausgebildeten Verriegelungslöchern (37) aufweist, die mit den Verriegelungslöchern (37) des ersten Verriegelungsabschnitts (35) fluchten, wenn sich der Betätigungshebel (30) in der Schließstellung befindet, so dass der Betätigungshebel (30) mittels den Verriegelungselementen an dem Gehäuse (13) festsetzbar ist.

17. Kabelverriegelungssystem nach Anspruch 16,
**dadurch gekennzeichnet, dass**
der Kopfabschnitt (72) in einer zumindest im Wesentlichen senkrecht zur Verstellachse (V) verlaufenden Ebene über einen Winkelbereich von mehr als 180°, insbesondere mehr als 200°, bevorzugt mehr als 220°, besonders bevorzugt zumindest im Wesentlichen 240°, kreisförmig abgerundet ist, und/oder die beiden Verriegelungsabschnitte (35, 36) zumindest im Wesentlichen identisch ausgebildet sind und/oder jeweils eine rechteckige Gestalt, vorzugsweise mit abgerundeten Ecken, aufweisen, und/oder der Zwischenabschnitt (34) in einer senkrecht zur Verstellachse (V) verlaufenden Ebene und in einer senkrecht zur Längsrichtung des in der Schließstellung befindlichen Betätigungshebels (30) verlaufenden Richtung im Vergleich zu dem Kopfabschnitt (72) und dem ersten Verriegelungsabschnitt (35) eine reduzierte Breite aufweist, wobei bevorzugt die Breite des Betätigungshebels (30) in einem dem Zwischenabschnitt (34) des Gehäuses (13) entsprechenden Bereich die reduzierte Breite nicht überschreitet.

## Claims

1. A cable locking system (11), in particular for the locking of machines, of devices or of plants on servicing, cleaning or maintenance, comprising:
a housing (13);
a cable (15) whose one end (17A) is fastened or fastenable to the housing (13) and whose other end (17B) can be introduced into a cable passage (19) formed in the housing (13);
a clamping device (33) for clamping the cable (15) in the cable passage (19) in order to stop a displacement of the cable (15) in the cable passage (19) in at least a cable removal direction (K); and
an actuation element (30) which is associated with the clamping device (33) and which is adjustable between a closed position, in which the actuation element (30) can be fixed to the housing (13) by means of locking elements, in particular padlocks, and an open position in order selectively to adjust at least one clamp jaw (40A, 40B) of the clamping device (33) between a holding position clamping the cable (15) in the cable passage (19) and a release position releasing the cable (15), wherein
the adjustment of the at least one clamp jaw (40A, 40B) between the holding position and the release position comprises a pivot movement about a respective pivot axis (S1, S2),
**characterized in that**
the clamping device (33) comprises at least two clamp jaws (40A, 40B) which are arranged at both sides of the cable passage (19) and are each pivotable between a holding position clamping the cable (15) in the cable passage (19) and a release position releasing the cable (15).

2. A cable locking system in accordance with claim 1,
**characterized in that**
the at least one clamp jaw (40A, 40B) comprises an eccentric cam (42A, 42B) having a cable clamping surface (43A, 43B) which has a convexly curved progression in a sectional plane extending transversely with respect to the pivot axis (S1, S2), with the cable clamping surface (43A, 43B) in particular having grooves and/or teeth (45), with the grooves and/or the teeth (45) preferably being oriented in such a way that they are set against the cable removal direction (K) in the holding position.

3. A cable locking system in accordance with one of the preceding claims,
**characterized in that**
the clamping device (33) is configured in such a way that, in the holding position, a displacement of the cable (15) is blocked in the cable removal direction (K) and is possible against the cable removal direction (K), with the at least one clamp jaw (40A, 40B) in particular being preloaded by a spring device, in particular by a torsion spring, in the direction of the holding position, with the clamping device (33) preferably being configured in such a way that the at least one clamp jaw (40A, 40B) is automatically pivoted against the preload from the holding position in the direction of the release position by means of a displacement of the cable (15) against the cable removal direction (K).

4. A cable locking system in accordance with any one of the preceding claims,
**characterized in that**
the adjustment of the actuation element (30) between the closed position and the open position comprises a pivot movement about an adjustment axis (V).

5. A cable locking system in accordance with claim 4,
**characterized in that**
the actuation element (30) is configured as an actuation lever pivotable about the adjustment axis (V); and/or **in that** the adjustment axis (V) extends in parallel with the at least one pivot axis (S1, S2) of the at least one clamp jaw (40A, 40B); and/or **in that** the actuation element (30) is at least partly arranged in a cut-out (31) formed in the housing (13), with the pivot movement of the actuation element (30) about the adjustment axis (V) being bound in at least one direction by a respective wall section of the cut-out (31).

6. A cable locking system in accordance with claim 4 or claim 5,
**characterized in that**
an adjustment element (47) which is connected in a drive-effective manner to the actuation element (30) and which is supported at the housing (13) rotatable about the adjustment axis (V) is provided with at least one cam (49A, 49B), in particular a cam disk, with the adjustment element (47) cooperating with the respective clamp jaw (40A, 40B) via the respective cam (49A, 49B) in such a way that, on a pivoting of the actuation element (30) into the open position, the respective clamp jaw (40A, 40B) is pivoted into the release position, in particular against a preload.

7. A cable locking system in accordance with claim 6,
**characterized in that**
the respective cam (49A, 49B) of the adjustment element (47) does not contact the respective clamp jaw (40A, 40B) when the actuation element (30) is present in the closed position; and/or **in that** the adjustment element (47) has two cams (49A, 49B) disposed opposite with respect to the adjustment axis (V).

8. A cable locking system in accordance with claim 6 or claim 7,
**characterized in that**,
at an end face of the at least one clamp jaw (40A, 40B), a projection (53) is arranged with which the cam (49A, 49B) of the adjustment element (47) cooperates; and/or **in that** the actuation element (30) has a shaft whose longitudinal axis corresponds to the adjustment axis (V), with the rotatable adjustment element (47) being rotationally fixedly connected to the shaft, in particular via a tongue and groove connection, and/or being axially fixedly held at the shaft via a securing element, in particular via a circlip.

9. A cable locking system in accordance with any one of the preceding claims,
**characterized in that**
the actuation element (30) can be latched to the housing (13) in the open position and/or in the closed position; and/or **in that** the actuation element (30) has a plurality of locking apertures (37) which are flush with corresponding locking apertures (37) formed in a locking section (35) of the housing (13) when the actuation element (30) is present in the closed position such that the actuation element (30) can be fixed to the housing (13) by means of locking elements, in particular padlocks.

10. A cable locking system in accordance with any one of the preceding claims,
**characterized in that**
the one end (17A) of the cable (15) can be releasably fastened to the housing (13).

11. A cable locking system in accordance with claim 10,
**characterized in that**
a head part (55) is fastened to the end (17A) of the cable (15) provided for the releasable fastening to the housing (13), with, in a direction of assembly (SP), the cable (15), but not the head part (55), being able to be led through a receiver (59) for the end (17A) of the cable (15) provided with the head part (55), said receiver being formed in a holding device (57) of the housing (13).

12. A cable locking system in accordance with claim 11,
**characterized in that**
the holding device (57) comprises a holding element in which the receiver (59) is formed and which is pivotably supported in the housing (13) between an operating position and an assembly position.

13. A cable locking system in accordance with claim 12,
**characterized in that**
a pivot recess (69) is formed in the housing (13) for the end (17A) of the cable (15) provided for the releasable fastening to the housing (13), which pivot recess is sufficiently large to allow a pivot movement of the end (17A) of the cable (15) fastened to the housing (13), with boundary sections (70A, 70B) of the pivot recess (69) in particular forming abutments for the cable (15) and thereby bounding the pivot movement of the holding element (57) when the end (17A) of the cable (15) is fastened to the housing (13).

14. A cable locking system in accordance with claim 12 or claim 13,
**characterized in that**,
in the housing (13), a removal opening (65) is formed through which, in the assembly position of the holding element (57), the head part (55) can be removed together with the cable (15) from the housing (13) away from the direction of assembly (SP).

15. A cable locking system in accordance with any one of the claims 11 to 14,
**characterized in that**
a plurality of cables (15) of different lengths are provided which are selectively releasably fastenable to the housing (13) by means of the respective one end (17A).

16. A cable locking system in accordance with any one of the preceding claims,
**characterized in that**
the housing (13) has a head section (72) and a first locking section (35) which is connected to the head section (72) via an intermediate section (34) and which is formed as a plate-shaped prolongation, wherein the clamping device (33) is arranged in the head section (72) and locking apertures (37) are formed in the first locking section (35), and wherein the actuation element (30) is configured as an actuation lever which is pivotable about an adjustment axis (V) and which has, at one free end, a plate-shaped second locking section (36) having a plurality of locking apertures (37) formed therein which are flush with the locking apertures (37) of the first locking section (35) when the actuation lever (30) is present in the closed position such that the actuation lever (30) can be fixed to the housing (13) by means of the locking elements.

17. A cable locking system in accordance with claim 16,
**characterized in that**
the head section (72) is rounded in circular form in a plane extending at least substantially perpendicular to the adjustment axis (V) over an angular range of more than 180°, in particular of more than 200°, preferably of more than 220°, particularly preferably of at least substantially 240°; and/or **in that** the two locking sections (35, 36) are at least of substantially identical design and/or each have a rectangular shape, preferably with rounded corners; and/or **in that**, in comparison with the head section (72) and with the first locking section (35), the intermediate section (34) has a reduced width in a plane extending perpendicular to the adjustment axis (V) and in a direction extending perpendicular to the longitudinal direction of the actuation lever (30) present in the closed position, with the width of the actuation lever (30) in a region corresponding to the intermediate section (34) of the housing (13) preferably not exceeding the reduced width.

## Revendications

1. Système de verrouillage à câble (11), en particulier pour verrouiller des machines, des appareils ou des installations pendant l'entretien, le nettoyage ou la maintenance, comportant :
un boîtier (13),
un câble (15) dont une extrémité (17A) est fixée ou fixable sur le boîtier (13) et dont l'autre extrémité (17B) peut être introduite dans un canal à câble (19) ménagé dans le boîtier (13),
un moyen de serrage (33) pour serrer le câble (15) dans le canal à câble (19) afin d'interdire un déplacement du câble (15) dans le canal à câble (19) au moins dans une direction d'enlèvement de câble (K), et
un élément d'actionnement (30) associé au moyen de serrage (33), qui est déplaçable entre une position de fermeture dans laquelle l'élément d'actionnement (30) peut être immobilisé sur le boîtier (13) au moyen d'éléments de verrouillage, en particulier par des cadenas, et une position d'ouverture pour déplacer au moins une mâchoire de serrage (40A, 40B) du moyen de serrage (33) au choix entre une position de retenue serrant le câble (15) dans le canal à câble (19) et une position de libération libérant le câble (15), dans lequel
le déplacement de ladite au moins une mâchoire de serrage (40A, 40B) entre la position de retenue et la position de libération inclut un mouvement de pivotement autour d'un axe de pivotement respectif (S1, S2),
**caractérisé en ce que**
le moyen de serrage (33) comprend au moins deux mâchoires de serrage (40A, 40B) qui sont agencées de part et d'autre du canal à câble (19) et qui sont mobiles en pivotement chacun entre une position de retenue serrant le câble (15) dans le canal à câble (19) et une position de libération libérant le câble (15).

2. Système de verrouillage à câble selon la revendication 1,
**caractérisé en ce que**
ladite au moins une mâchoire de serrage (40A, 40B) comprend une came excentrique (42A, 42B) ayant une surface de serrage de câble (43A, 43B) qui présente une allure recourbée convexe dans un plan de coupe transversal à l'axe de pivotement (S1, S2), et en particulier la surface de serrage de câble (43A, 43B) comprend des cannelures et/ou des dents (45), et de préférence les cannelures et/ou les dents (45) sont orientées de manière à être positionnées contre la direction d'enlèvement de câble (K), dans la position de retenue.

3. Système de verrouillage à câble selon l'une des revendications précédentes,
**caractérisé en ce que**
le moyen de serrage (33) est réalisé de telle sorte que dans la position de retenue, un déplacement du câble (15) dans la direction d'enlèvement de câble (K) est bloqué et est possible en sens opposé à la direction d'enlèvement de câble (K), et en particulier ladite au moins une mâchoire de serrage (40A, 40B) est précontrainte en direction de la position de retenue par un moyen formant ressort, en particulier par un ressort à branches, et de préférence le moyen de serrage (33) est réalisé de telle sorte que ladite au moins une mâchoire de serrage (40A, 40B) est pivotée automatiquement à l'encontre de la précontrainte hors de la position de retenue en direction de la position de libération, par déplacement du câble (15) en sens opposé à la direction d'enlèvement de câble (K).

4. Système de verrouillage à câble selon l'une des revendications précédentes,
**caractérisé en ce que**
le déplacement de l'élément d'actionnement (30) entre la position de fermeture et la position d'ouverture inclut un mouvement de pivotement autour d'un axe de déplacement (V).

5. Système de verrouillage à câble selon la revendication 4,
**caractérisé en ce que**
l'élément d'actionnement (30) est réalisé sous la forme d'un levier d'actionnement pouvant pivoter autour de l'axe de déplacement (V), et/ou l'axe de déplacement (V) s'étend parallèlement audit au moins un axe de pivotement (S1, S2) de ladite au moins une mâchoire de serrage (40A, 40B), et/ou l'élément d'actionnement (30) est agencé au moins partiellement dans une échancrure (31) ménagée dans le boîtier (13), le mouvement de pivotement de l'élément d'actionnement (30) autour de l'axe de déplacement (V) étant limité dans au moins une direction par une portion de paroi respective de l'échancrure (31).

6. Système de verrouillage à câble selon la revendication 4 ou 5,
**caractérisé en ce que**
un élément de réglage (47) relié en entraînement à l'élément d'actionnement (30) et monté sur le boîtier (13) de façon mobile en rotation autour de l'axe de déplacement (V) est muni d'au moins une came (49A, 49B), en particulier d'un disque à came, l'élément de réglage (47) coopérant avec la mâchoire de serrage respective (40A, 40B) par la came respective (49A, 49B) de telle sorte que lors d'un pivotement de l'élément d'actionnement (30) jusque dans la position d'ouverture, la mâchoire de serrage respective (40A, 40B) est pivotée jusque dans la position de libération, en particulier à l'encontre d'une précontrainte.

7. Système de verrouillage à câble selon la revendication 6,
**caractérisé en ce que**
la came respective (49A, 49B) de l'élément de réglage (47) ne s'appuie pas contre la mâchoire de serrage respective (40A, 40B) lorsque l'élément d'actionnement (30) se trouve dans la position de fermeture, et/ou l'élément de réglage (47) comprend deux cames (49A, 49B) situées en regard par rapport à l'axe de déplacement (V).

8. Système de verrouillage à câble selon la revendication 6 ou 7,
**caractérisé en ce que**
sur une surface frontale de ladite au moins une mâchoire de serrage (40A, 40B) est prévue une saillie (53) avec laquelle la came (49A, 49B) de l'élément de réglage (47) coopère, et/ou l'élément d'actionnement (30) comprend un arbre dont l'axe longitudinal correspond à l'axe de déplacement (V), l'élément de réglage rotatif (47) étant relié solidairement en rotation à l'arbre en particulier par une liaison à languette-et-rainure, et/ou étant retenu axialement solidairement sur l'arbre par un élément de blocage, en particulier par un jonc.

9. Système de verrouillage à câble selon l'une des revendications précédentes,
**caractérisé en ce que**
l'élément d'actionnement (30) est susceptible de s'enclencher avec le boîtier (13) dans la position d'ouverture et/ou dans la position de fermeture, et/ou l'élément d'actionnement (30) comprend plusieurs trous de verrouillage (37) qui sont en alignement avec des trous de verrouillage (37) correspondants ménagés dans une portion de verrouillage (35) du boîtier (13), lorsque l'élément d'actionnement (30) se trouve dans la position de fermeture, de telle sorte que l'élément d'actionnement (30) est susceptible d'être immobilisé sur le boîtier (13) au moyen d'éléments de verrouillage, en particulier par des cadenas.

10. Système de verrouillage à câble selon l'une des revendications précédentes,
**caractérisé en ce que**
le câble (15) peut être fixé de façon détachable sur le boîtier (13) par l'une des extrémités (17A).

11. Système de verrouillage à câble selon la revendication 10,
**caractérisé en ce que**
une partie de tête (55) est fixée à l'extrémité (17A) du câble (15) prévue pour la fixation détachable sur le boîtier (13), le câble (15) mais non pas la partie de tête (55) pouvant traverser en direction de montage (SP) un logement (59) ménagé à travers un moyen de retenue (57) du boîtier (13) et destiné à l'extrémité (17A) du câble (15) pourvue de la partie de tête (55).

12. Système de verrouillage à câble selon la revendication 11,
**caractérisé en ce que**
le moyen de retenue (57) comprend un élément de retenue dans lequel est ménagé le logement (59) et qui est monté dans le boîtier (13) de façon mobile en pivotement entre une position de fonctionnement et une position de montage.

13. Système de verrouillage à câble selon la revendication 12,
**caractérisé en ce que**
une échancrure de pivotement (69) est ménagée dans le boîtier (13) pour l'extrémité (17A) du câble (15) prévue pour la fixation détachable sur le boîtier (13), qui est suffisamment grande pour permettre un mouvement de pivotement de l'extrémité (17A) du câble (15) fixée sur le boîtier (13), et en particulier des portions de bord (70A, 70B) de l'échancrure de pivotement (69) forment des butées pour le câble (15) et limitent ainsi le mouvement de pivotement de l'élément de retenue (57) lorsque l'extrémité (17A) du câble (15) est fixée sur le boîtier (13).

14. Système de verrouillage à câble selon la revendication 12 ou 13,
**caractérisé en ce que**
une ouverture d'enlèvement (65) est ménagée dans le boitier (13), par laquelle la partie de tête (55) est susceptible d'être enlevée hors du boîtier (13) conjointement avec le câble (15) en sens opposé à la direction de montage (SP), dans la position de montage de l'élément de retenue (57).

15. Système de verrouillage à câble selon l'une des revendications 11 à 14,
**caractérisé en ce que**
il est prévu plusieurs câbles (15) de longueurs différentes qui sont susceptibles d'être fixés au choix de façon détachable sur le boîtier (13) par ladite extrémité respective (17A).

16. Système de verrouillage à câble selon l'une des revendications précédentes,
**caractérisé en ce que**
le boîtier (13) comprend une portion de tête (72) et une première portion de verrouillage (35) reliée à la portion de tête (72) par une portion intermédiaire (34) et réalisée sous forme de prolongement en forme de plaque, dans lequel le moyen de serrage (33) est agencé dans la portion de tête (72), et des trous de verrouillage (37) sont ménagés dans la première portion de verrouillage (35), et l'élément d'actionnement (30) est réalisé sous la forme d'un levier d'actionnement qui est mobile en pivotement autour d'un axe de déplacement (V) et qui présente à une extrémité libre une seconde portion de verrouillage (36) en forme de plaque pourvue de plusieurs trous de verrouillage (37) ménagés dans celle-ci qui sont en alignement avec les trous de verrouillage (37) de la première portion de verrouillage (35) lorsque le levier d'actionnement (30) se trouve dans la position de fermeture, de sorte que le levier d'actionnement (30) est susceptible d'être immobilisé sur le boîtier (13) au moyen des éléments de verrouillage.

17. Système de verrouillage à câble selon la revendication 16,
**caractérisé en ce que**
dans un plan au moins sensiblement perpendiculaire à l'axe de déplacement (V), la portion de tête (72) est arrondie en forme circulaire sur une plage angulaire de plus de 180°, en particulier de plus de 200°, de préférence de plus de 220°, de manière particulièrement préférée sensiblement sur 240°, et/ou les deux portions de verrouillage (35, 36) sont réalisées au moins sensiblement identiques et/ou présentent chacune une forme rectangulaire, de préférence à coins arrondis, et/ou dans un plan perpendiculaire à l'axe de déplacement (V) et dans une direction perpendiculaire à la direction longitudinale du levier d'actionnement (30) situé dans la position de fermeture, la portion intermédiaire (34) présente une largeur réduite par comparaison à la portion de tête (72) et à la première portion de verrouillage (35), et de préférence la largeur du levier d'actionnement (30) ne dépasse pas la largeur réduite dans une zone correspondante à la portion intermédiaire (34) du boîtier (13).
